(19) Europäisches Patentamt
European Patent Office
Office européen des brevets

(11) **EP 4 756 380 A1**

(12) **EUROPEAN PATENT APPLICATION**

(43) Date of publication:
**10.06.2026 Bulletin 2026/24**

(21) Application number: **24217060.3**

(22) Date of filing: **03.12.2024**

(51) International Patent Classification (IPC):
**G01C 21/34** (2006.01)    **G01C 21/36** (2006.01)
**G08G 1/01** (2006.01)     **G08G 1/00** (2006.01)
**B60W 30/10** (2006.01)    **B60W 40/02** (2006.01)
**B60W 40/10** (2012.01)    **B60W 60/00** (2020.01)
**G05D 1/646** (2024.01)    **G01C 21/00** (2006.01)

(52) Cooperative Patent Classification (CPC):
**G01C 21/3415; B60W 30/10; B60W 40/02;
B60W 40/10; B60W 60/001; G01C 21/3461;
G01C 21/3691; G05D 1/646; G08G 1/0112;
G08G 1/20;** G01C 21/3841; G01C 21/3848

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Volvo Autonomous Solutions AB
405 08 Göteborg (SE)**

(72) Inventors:
• **SJÖBERG, Johan
722 19 VÄSTERÅS (SE)**
• **SKILLSÄTER, Calle
644 36 TORSHÄLLA (SE)**

(74) Representative: **Kransell & Wennborg KB
P.O. Box 2096
403 12 Göteborg (SE)**

Remarks:
A request for correction of the drawings has been filed pursuant to Rule 139 EPC. A decision on the request will be taken during the proceedings before the Examining Division (Guidelines for Examination in the EPO, A-V, 3.).

(54) **ROUTE UPDATE BASED ON VEHICLE DATA**

(57) A computer system (100) for automated identification of locations of struggle during attempted route-following for autonomous vehicles (12) is provided, and includes processing circuitry configured to: obtain data (130) indicative of at least geographical position for one or more autonomous vehicles when attempting to follow a predefined route trajectory (140); detect, based on the data, a location along the route trajectory at which the vehicles appear more likely to deviate from/struggle to follow the trajectory, and, in response to the detection, i) issue a notification of the detected location to an operator (152), and/or ii) automatically update the trajectory (140) based on the data to improve trajectory-following/reduce the struggle to follow. A corresponding method, computer program product and storage medium are also provided.

Fig. 1

EP 4 756 380 A1

## Description

## TECHNICAL FIELD

The disclosure relates generally to routing of autonomous vehicles. In particular aspects, the disclosure relates to update of routes of autonomous vehicles based on vehicle data. The disclosure can be applied to heavy-duty vehicles, such as trucks, buses, and construction equipment, among other vehicle types. Although the disclosure may be described with respect to a particular vehicle, the disclosure is not restricted to any particular vehicle.

## BACKGROUND

In many cases, and for various reasons, autonomous vehicles are not given full freedom in how to travel from one point to another. Instead, each vehicle is provided with a particular route that the vehicle is expected to follow. If viewed on a map, such a route may correspond to a particular curve or collection of curves linking a starting point and a destination together, and the vehicle is expected to navigate such that it follows the route as closely as possible. Routes may be generated by solving one or more optimization problems, in order to find routes that are considered "optimal" in terms of e.g. one or more of distance travelled, fuel/energy consumption, maximum slope/grading, legal and/or structural road limitations, and similar. In other situations, routes may be manually assigned by for example an operator and/or route planner, e.g. by manually drawing the route on a map, and similar.

Due to e.g. environmental and/or modelling effects, a route assigned to a vehicle may be more or less difficult to follow, and more difficult routes may result in the vehicle not being able to follow the route as precisely as desired. This may further create several unwanted effects. For example, for an operator and/or manager, the vehicles not following their assigned routes may create a feeling that the overall system/fleet is not behaving as expected. As another example, vehicles who try to follow a difficult route may be more likely to become damaged, due to e.g. hitting objects on the side of the route, by driving down into a ditch, and similar. As yet another example, maintenance costs may increase, as more wear is caused by vehicles having to e.g. make tighter turns, accelerate and/or decelerate harder, and similar, in order to follow their assigned routes, in particular if the routes are to be completed within certain time limits. Overall, a system/fleet wherein each vehicle is capable of following its assigned route may be considered as more productive, predictable and cost-effective compared to a system/fleet in which this is not the case.

The present disclosure aims at providing a solution that at least partially overcome one or more of the above-identified issues with contemporary technology.

## SUMMARY

According to a first aspect of the disclosure, there is provided a computer system for automated identification of locations of struggle during attempted route-following for autonomous vehicles. The computer system includes processing circuitry configured to: obtain data indicative of at least geographical position for one or more autonomous vehicles that has attempted to follow a predefined route trajectory (that is, the data is recorded and/or transmitted while the one or more vehicles attempts to follow the predefined route trajectory, e.g. as part of one or more previous transport missions assigned to these one or more vehicles); detect, based on the data, a location along the (predefined) route trajectory at which the one or more vehicles appear to be more likely to deviate from, and/or to struggle to follow, the predefined route trajectory; and, in response to this detection, i) issue a notification indicative of the detected location to an operator responsible for route trajectory planning, and/or ii) automatically update the predefined route trajectory based on the data to improve trajectory following and/or to reduce the struggle to follow. The first aspect seeks to solve the problem of how to make a fleet of autonomous vehicles more productive, more predictable and cost-effective. A technical benefit may include that by automatically identifying a location along a route that is to be driven, the route can be corrected such that the one or more vehicles that are to follow the route next can be more likely to adhere to the route, with less deviation, and thereby behave more as expected. Further, updating the route may also reduce the risk of the vehicle(s) getting damaged, and reduce the risk of excessive wear caused by unwanted struggling of the vehicles when attempting to follow the route (resulting in reduced down-time, maintenance efforts/costs, and similar). The envisaged solution also enables to indicate the location of interest to an operator, such that the operator can easily see what parts of the route in which the vehicles are not behaving as expected, and such that the operator may take action to update the route to improve route adherence/following and/or reduce struggling, e.g. by manually updating the route or by using e.g. suitable software.

Optionally, in some examples, including in at least one preferred example, the processing circuitry may be further configured to assign the updated route trajectory to one or more (autonomous) vehicles, e.g. by transferring information sufficient to define the updated route trajectory to these one or more vehicles. A technical benefit may include that the updated route trajectory may be easier for the vehicles to follow, and thereby reduce struggling, improve route following, and provide an overall system in which the vehicles are more likely to follow their assigned routes.

Optionally, in some examples, including in at least one preferred example, to detect the location may include (for the processing circuitry) to: compute lateral deviations between geographical position and the predefined route trajectory, and detect the location as an outlier among the lateral deviations. A technical benefit may include that deviations caused by e.g. measurement error in geographical position, and similar, can be filtered out, and that only statistically significant deviations are used to identify the location. Outliers may for example be defined as those elements that are a certain number of standard deviations away from e.g. an average geographical position of all vehicles at the location, or similar.

Optionally, in some examples, including in at least one preferred example, to detect the location as an outlier among the lateral deviations may include (for the processing circuitry) to use Hampel filtering, or any other suitable filtering. A technical benefit may include that filtering based on moving windows (such as Hampel filtering) may be particular suitable for this purpose, i.e. to detect outliers corresponding to one or more troublesome regions/locations along the route.

Optionally, in some examples, including in at least one preferred example, to detect the location may include (for the processing circuitry) to detect that at the detected location, a distance between the geographical position and a stationary object along the predefined route is below a distance threshold value. A technical benefit may include that by updating the route such that the vehicles are less likely to come as close to a stationary object as before the route update, the risk of a vehicle e.g. colliding with the stationary object can thus be eliminated or at least reduced.

Optionally, in some examples, including in at least one preferred example, the data may be indicative of at least one further vehicle property value at the geographical position, and to detect the location may include (for the processing circuitry) to determine that at the detected location, the one further vehicle property value indicated by the data exceeds a threshold value, and/or exceeds an assumed vehicle property value with more than a difference threshold value. A technical benefit may include that by not only considering deviation in position but also one or more other vehicle properties, further guidance may be provided on where along the route the vehicles are more likely to struggle to follow the route. Information about the other vehicle property values, as well as the corresponding geographical location, may for example be presented as an overlay on a map, and provide visual indications to e.g. an operator in what regions along the route the vehicles appear to be more likely to struggle. The operator may also take such information into account when taking action, e.g. when manually updating the route trajectory and/or when using more automated software, or similar, e.g. by trying to update the route such that it no longer passes through (or even close by) such "troublesome" locations as indicated by the data.

Optionally, in some examples, including in at least one preferred example, a further vehicle property such as referred to above may be vehicle side slip. A technical benefit may include that side slip data may serve as a good indicator that, at the location, the route is difficult for the vehicles to follow, and that the vehicles are not being able to cope with e.g. road/route curvature (at least for the given road conditions). For example, it may be detected that the vehicles are e.g. skidding and/or drifting (in turns, and/or on straight passages) indicated by the vehicle side slip.

Optionally, in some examples, including in at least one preferred example, another example of such a further vehicle property may be vehicle angular speed. A technical benefit may include that vehicle angular speed may also serve as a good indicator that, at the location, the vehicle is struggling to follow the route, for example due to a corner being too tight or requested to be navigated with too high velocity, and similar.

Optionally, in some examples, including in at least one preferred example, both vehicle side slip and angular speed may serve as a good indicator of struggling, e.g. when both vehicle side slip and angular speed exceeds their respective threshold value. Generally herein, side slip and/or angular speed may be used to detect the location even if there is no (significant) lateral deviation at the location. Phrased differently, even though a vehicle manages to follow a route, further vehicle properties such as side slip and/or angular speed may indicate that the vehicle is struggling (too much) while following the route, leading to e.g. increased wear on the vehicle and/or ground surface, risk of vehicle failure, and similar.

Optionally, in some examples, including in at least one preferred example, also longitudinal slip may be considered as a further vehicle property. In particular, both the longitudinal and lateral/side slip exceeding their respective threshold value may serve as a good indicator of the vehicle struggling to follow the route at the location.

Optionally, in some examples, including in at least one preferred example, yet another example of such a further vehicle property may be vehicle vibration. A technical benefit may include that vibration data may serve as another indicator of too much struggling. For example, even if the vehicle manages to follow the route without (significant) lateral deviations, excessive vibrations may indicate that the vehicle is struggling to do so. Excessive vibrations may for example lead to excessive wear and/or risk of vehicle failure, and locations with such vibrations may thus for example be avoided as part of updating the route.

Optionally, in some examples, including in at least one preferred example, yet another example of such a further vehicle property may be vehicle torque demand. A technical benefit may include that torque demand may serve as an indicator that e.g. ground conditions are poor, that the ground is too steep for the vehicle to follow the route without excessive effort, and similar. Torque demand may for example be combined with side slip to provide an indicator of excessive struggling, e.g. by checking that both torque demand and side slip exceeds their respective threshold value.

Optionally, in some examples, including in at least one preferred example, yet another example of such a further vehicle property may be vehicle speed, including e.g. longitudinal and/or lateral vehicle speed. A technical benefit may include that vehicle speed may provide information about how vehicle performance is influenced by different speeds. Further, vehicle speed may be compared to e.g. a desired speed (profile) along the route, to check whether the vehicle appears to be struggling to follow the route with the desired speed. For example, if the indicated vehicle speed at a location is below a desired speed, this may serve as an indicator that the vehicle is struggling to follow the route at that point. The same applies if the speed is above a desired speed, which may serve as an indicator that the route is too steep (downhill), that the surface is too slippery, that the brakes of the vehicle are not capable enough to sufficiently reduce vehicle speed, or similar. In each case, the route may thus be updated, either by avoiding such locations, by reducing or increasing the desired speed, or both.

Optionally, in some examples, including in at least one preferred example, as indicated already above, a "predefined route trajectory" may include also an indication about a desired speed profile along the route, and to automatically update the predefined route trajectory may include (for the processing circuitry) to adjust a desired speed at the detected location (e.g. decrease or increase a desired speed at the location, as suitable). A technical benefit may include that struggling may thus be reduced or eliminated, that route adherence/following may be improved, and/or that e.g. wear may be reduced or eliminated as for example driving at too high speed may cause excessive wear, or as driving at too low speed may also cause excessive wear of e.g. brakes.

Optionally, in some examples, including in at least one preferred example, to automatically update the predefined route trajectory may include (for the processing circuitry) to reduce a curvature of the predefined route trajectory at the detected location. A technical benefit may include that by reducing the curvature, the desired route is made smoother at the location, and may be easier to follow and with less struggling, thereby improving route adherence/following, reduce wear, improve predictability, etc., as already described above.

According to a second aspect of the present disclosure, there is provided a (computer-implemented) method for automated identification of locations of struggle during attempted route-following for autonomous vehicles. The method is performed by processing circuitry of a computer system (such as that of the first aspect), and includes: obtaining (by the processing circuitry), the data indicative of at least geographical position for one or more autonomous vehicles when attempting to follow the predefined route trajectory; detecting (by the processing circuitry), based on the data, the location along the route trajectory at which the one or more vehicles appear to be more likely to deviate from, and/or to struggle to follow, the predefined route trajectory, and, in response to the detection (and by the processing circuitry), i) issuing the notification indicative of the detected location to the operator responsible for route trajectory planning, and/or ii) automatically updating the predefined route trajectory based on the data to improve trajectory following and/or to reduce the struggle to follow. The method may thus be as performed by the processing circuitry of the computer system of the first aspect. The second aspect may seek to solve the problem of how to provide a method to be performed by a processing circuitry of a computer system, to achieve the same benefits as discussed already herein with reference to the first aspect and any example thereof.

According to a third aspect of the present disclosure, there is provided a computer program product. The computer program product includes program code for performing, when executed by the processing circuitry (such as that of the first aspect), the method of the second aspect (or any example thereof). The third aspect may seek to solve the problem of how to logistically distribute a computer program that causes, when installed and/or executed, the processing circuitry to perform the method of the second aspect.

According to a fourth aspect of the present disclosure, there is provided a computer-readable storage medium that includes instructions which, when executed by the processing circuitry (of e.g. the first aspect), cause the processing circuitry to perform the method of the second aspect (or any example thereof). The fourth aspect may seek to solve the problem of how to provide instructions to a processing circuitry for performing the method of the second aspect, with the same benefits thereof as already described herein. In some examples, the computer-readable storage medium may be nontransitory. In other examples, the computer-readable storage medium may be transitory.

According to a fifth aspect of the present disclosure, there is provided a computer program, that includes program code for performing, when executed by the processing circuitry (of e.g. the first aspect), the method of the second aspect (or any example thereof). The fifth aspect may seek to solve the problem of how to provide the computer program itself, in addition to the third aspect that solves the problem of how to logistically distribute such a program.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

> FIG. 1 schematically illustrates various examples of a computer system for automated identification of locations of struggle during attempted route-following, according to the present disclosure.
> FIG. 2 schematically illustrates a flowchart of various examples of a method for automated identification of locations of struggle during attempted route-following, according to the present disclosure.
> FIG. 3 schematically illustrates various examples of a location along a route trajectory at which a vehicle deviates from, and/or struggles to follow, a predefined route, according to the present disclosure.
> FIG. 4A schematically illustrates an example of how to determine lateral deviations from a predefined route trajectory, according to the present disclosure.
> FIG. 4B schematically illustrates an example of how to detect outliers in lateral deviations, according to the present disclosure.
> FIG. 5 is a schematic diagram of an exemplary computer system for implementing examples disclosed herein, according to an example.

## DETAILED DESCRIPTION

The detailed description set forth below provides information and examples of the disclosed technology with sufficient detail to enable those skilled in the art to practice the disclosure.

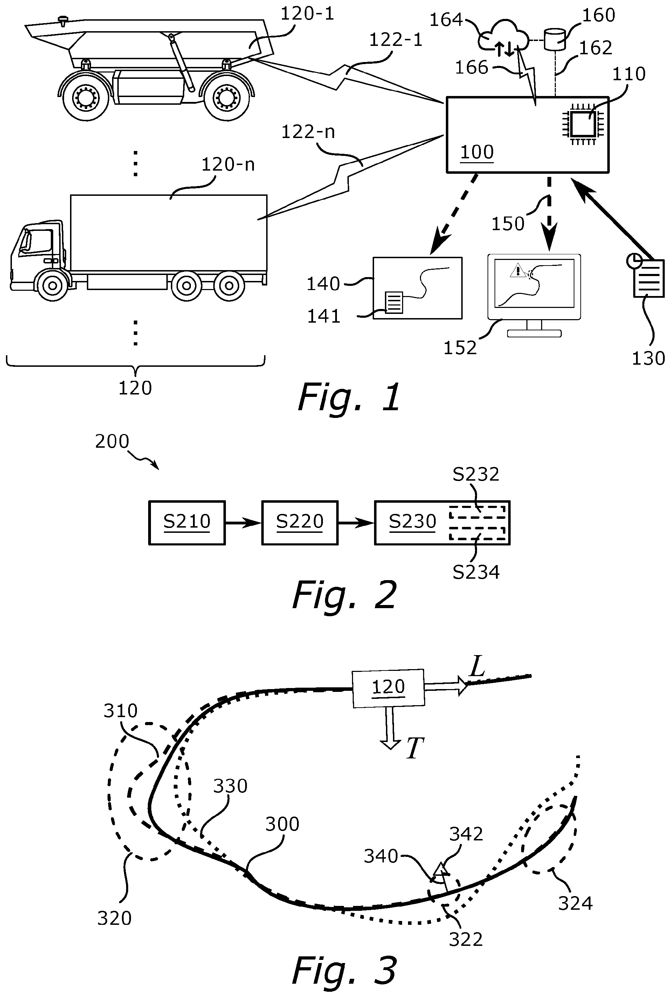

FIG. 1 schematically illustrates various examples of a computer system 100 for automated identification of locations of struggle during attempted route-following (for autonomous vehicles) as envisaged herein.

FIG. 2 schematically illustrates a flowchart of examples of a (computer-implemented) method 200 for such automated identification, as performed by processing circuitry 110 of the computer system 100.

The processing circuitry 110 is configured to (as part of e.g. an operation S210 of the method 200) obtain data 130 that is indicative of at least geographical position for one or more autonomous vehicles 120, here exemplified by at least an autonomous dumper 120-1 as well as an autonomous box-cargo truck 120-n. The exact number, and configuration, of the one or more autonomous vehicles 120 may of course be different from that shown in FIG. 1, and e.g. include fewer or more than two vehicles in total, and/or include vehicles of other, or additional, vehicle types. For the present disclosure, the exact configuration of the one or more autonomous vehicles 120 is not important, as long as there are at least on autonomous vehicle. The data 130 may for example include recordings of GPS coordinates (or coordinates received/obtained using another satellite navigation system than GPS, such as Beidou, GLONASS, Galileo or any other global navigation satellite system, GNSS). The data 130 may for example be collected directly by the computer system 100 communicating with the vehicles 120 (using e.g. corresponding wireless links 122-1, 122-n), or e.g. be obtained from one or more other entities responsible for collecting such position data for the vehicles 120. In some examples, the data 130 may be stored in a storage 160 with which the computer system 100 and processing circuitry 110 may communicate using a wired (or wireless) link 162, and/or e.g. be stored in/provided by a cloud-based service 164 with which the computer system 100 and processing circuitry 110 may then, if required, communicate using e.g. a wireless link 166. Exactly how the computer system 100 and processing circuitry 110 obtains the data 130 is not important. The data 130 indicates at least geographical positions of the one or more vehicles 120 when attempting to follow a predefined route trajectory (140), as part of e.g. one or more transport missions.

The processing circuitry 110 is further configured to detect (as part of e.g. an operation S220 of the method 200), based on the data 130, a location along the route trajectory 140 at which the one or more vehicles 120 appear to be more likely to deviate from, and/or to struggle to follow, the predefined route trajectory 140.

The processing circuitry 110 is further configured to, in response to detecting the location of struggle, perform one or more actions (as part of e.g. an operation S230 of the method 200). One such action may be to issue (as part of e.g. an operation S232 of the method 200) a notification 150 to an operator that is responsible for route trajectory planning. The notification 150 is indicative of the detected location at which the one or more vehicles 120 appear to be struggling to follow the route. The notification 150 may for example be a message sent to a data terminal 152 that the operator uses to monitor route-traffic and/or to draw/define routes that the one or more vehicles are to follow. For example, the data terminal 152 may include a monitor/display on which the operator may see what the predefined route trajectory 140 is, and how e.g. the one or more vehicles are moving (and/or have moved) along the route. Receiving the notification 150 may include to highlight, on the monitor (by using e.g. one or more graphical overlays, by adding text, by changing one or more colors, and similar) where along the route the detected location is. The operator may then, after noticing the "troublesome" location along the route on the monitor of the terminal 152, manually update the route trajectory such that the one or more vehicles 120 are less likely to have such struggle to follow the route. Instead of manually updating the route, the operator may use e.g. software providing functionality for automatically updating routes, such as to avoid one or more locations indicated as being troublesome.

In other examples, the processing circuitry 110 may instead, or in addition, be configured to automatically update (as part of e.g. an operation S234 of the method 200) the predefined route trajectory 140 based on the data 130 and the detected location, to improve trajectory following and/or to reduce the struggle to follow the route at the location. The processing circuitry 110 may for example be configured to perform such updating using functionality included as part of and/or implemented by the processing circuitry 110, or e.g. by communicating with one or more other entities configured to perform such updating.

As envisaged herein, a "route trajectory" is defined by at least a curve along which the vehicles are supposed to drive when following the route. The curve may for example be defined by an ordered plurality of coordinate points, and the route may for example be assumed to follow a straight line between any two consecutive such points. Other examples may include the use of e.g. splines or other mathematical functionality to define the route. For the present disclosure, it is not important exactly how the route is defined, as long as it may be extracted from the predefined route how the vehicles are supposed to drive in order to follow the route.

In some examples, in addition to the curve, the route trajectory may include further information such as at what speed, and/or with what acceleration, the vehicles are supposed to drive along the route. For example, the predefined route may define a speed and/or acceleration profile, such that a desired speed and/or acceleration is indicated/derivable at each point along the route, or at least at some points along the route. For example, the predefined route may define the curve itself, as well as at least one of speed and acceleration along the curve. The curve and optionally the speed and/or acceleration, and similar, may for example be provided as part of route data 141 used to define the predefined route trajectory 140, and to update the predefined route trajectory 140 may include to update such route data 141.

As envisaged herein, "coordinate points" may be defined using any suitable coordinate and/or reference system, such as rectangular coordinates, geodesic coordinates, spherical coordinates, cylindrical coordinates, or similar. Likewise, coordinates may be defined in e.g. longitude and latitude pairs, X- and Y-pairs, and similar, depending on what coordinate and/or reference system that is to be used. In addition, the coordinates (or other entity) used to define the route 140 may not necessarily be provided in a same coordinate and/or reference system as those of the data 130, and suitable translations may then be performed (e.g. by the processing circuitry 110) from e.g. one system to another, as needed.

In some examples, the processing circuitry 110 may be further configured to e.g. assign the updated route trajectory 140 to one or more of the vehicles 120, and/or to one or more other autonomous vehicles, as part of e.g. assigning one or more transport missions. By updating the trajectory to e.g. avoid one or more locations indicated as being troublesome (i.e. corresponding to one or more locations along the route at which the vehicles appear to struggle to follow the route), it may thus be easier for the one or more vehicles (such as 120) to follow the (updated) route in the future, which may reduce struggling, improve route following, and generating an overall scenario in which vehicles are more likely to deviate less from their assigned routes compared to if no action such as envisaged herein were taken.

**FIG. 3** schematically illustrates various examples of what is herein considered as a location at which one or more of the vehicles 120 are considered more likely to deviate from, and/or to struggle to follow, the predefined route trajectory. In FIG. 3, a vehicle 120 is supposed to follow a predefined route trajectory 300. The data such as 130 indicates an actual trajectory 310 as actually followed by the vehicle 120 (when attempting to follow the route 300), and can be seen that at a location 320, the vehicle 120 appears to have struggled to follow the route 310, as the actual trajectory 310 deviates substantially from that of the predefined route 300. FIG. 3 also serves to illustrates how, herein, a longitudinal direction L of the vehicle 120 may be defined, at each point along a route, as the direction pointing along the upcoming, closest part of the route (i.e. in the direction in which the vehicle 120 is currently, at each point, heading). Likewise, a transverse direction T of the vehicle 120 may be defined as a direction that is perpendicular (in a two-dimensional plane) to the longitudinal direction L.

In some examples, to automatically (or manually) update the predefined route trajectory may include, as illustrated in FIG. 3, smoothing of the predefined route trajectory 300 at the location 320 to generate an updated (predefined) route trajectory 330 that is more likely easier for the vehicle 120 (or some other autonomous vehicle) to follow the next time. Smoothing may be performed using any suitable algorithm therefore, and/or by updating e.g. an optimization problem solved to find optimal routes (by changing e.g. one or more conditions of such optimization, and similar).

In some examples, another location 322 may be detected, at which it may be concluded that a distance 340 between a geographical position of the vehicle 120 (or any other vehicle) and a stationary object 342 (such as e.g. a building or other stationary structure, and similar) is shorter than desirable. The processing circuitry 110 may then be configured to, in response to detecting the location 322, update the predefined route trajectory 300 (by generating the updated route trajectory 330), such that in the future, the vehicles such as 120 will not likely come as close to the object 342 as before, which may reduce e.g. a risk of a vehicle hitting the object 342 and thereby damaging either the vehicle itself or the object 342, or both. It is to be noted that as envisaged herein, a detected location may not necessarily mean that the vehicle 120 has failed to follow the predefined route 300, but that one or more other issues are present that requires to update the route 300 to e.g. improve safety and to reduce struggling.

Herein, coming too close to objects, or e.g. having to deter from the predefined route in order not to hit a stationary object, is considered as struggling. As envisaged herein, that a vehicle comes too close to a stationary object may for example be detected by confirming that the distance 340 is below a distance threshold value.

In yet other examples, a location 324 that is detected as troublesome may indicate that there is something else that causes the vehicle 120 to struggle more than desired in order to follow the predefined route 300. Phrased differently, the data 130 may in some examples be indicative of at least one further vehicle property value at the corresponding geographical position, and to detect the location may include to determine that there are one or more locations at which such at least one further vehicle property (as indicated by the data 130) e.g. exceeds a corresponding threshold value, and/or e.g. exceeds an assumed vehicle property value with more than a difference threshold value. As already exemplified herein, such a further vehicle property may e.g. be a distance to stationary objects along the route (as provided by e.g. laser measurements performed by one or more sensors of the vehicle, and indicated by the data 130).

In some examples, such a (further) vehicle property may be vehicle side slip. If defining a motion of a (center) of a wheel as a vector $V = (v_x, v_y)$ where $v_x$ and $v_y$ are respective velocity components, a lateral slip (or slip angle) of the wheel may be defined as

$$\sigma_{lat} = \arctan(v_y/v_x).$$

Likewise, if introducing a rotational speed $\Omega$ and radius $R$ of the wheel, a longitudinal slip of the wheel may be defined as

$$\sigma_{long} = \frac{\Omega R - v_x}{v_x}.$$

In other examples, slip may be calculated for the vehicle as a whole, by considering the velocity of the (center) of the vehicle instead of the wheel. Detecting a location as envisaged herein may include to confirm that one or both of $\sigma_{long}$ and $\sigma_{lat}$ exceeds a corresponding side slip threshold value, in particular that $\sigma_{lat} > \sigma_{lat}^*$ where $\sigma_{lat}^*$ is such a threshold value. Detecting that the side slip (e.g. the lateral side slip) exceeds the threshold value may confirm that the vehicle is on a borderline to being to cope with e.g. a road/trajectory curvature at the location, given e.g. current road conditions.

In some examples, such a (further) vehicle property may be vehicle angular speed, e.g. $\omega$. Vehicle angular speed may be defined as a rate of change of angle (e.g. radians or degrees) when the vehicle is turning, e.g. as vehicle velocity divided by a radius of the curved trajectory. Detecting the location may for example include that the vehicle angular speed exceeds an angular speed threshold value, e.g. $\omega > \omega^*$, where $\omega^*$ is the angular speed threshold value. In some examples, detecting the location may require that e.g. both the side slip (e.g. the lateral side slip) and the vehicle angular speed exceeds their respective threshold values.

In some examples, such a (further) vehicle property may be vehicle vibration, as measured/indicated by some suitable measure (such as velocity/speed, acceleration, vibration decibels, and similar). Detecting that the vehicle vibration exceeds a vehicle vibration threshold value at a location may serve as an indication that the vehicle is struggling to follow the predefined route trajectory at that location. It may, in some examples, e.g. be confirmed that lateral deviations are at least partially due to vibrations.

In some examples, such a (further) vehicle property may be vehicle torque demand. Detecting that the vehicle torque demand (e.g. a torque requested from the engine and/or transmission in order to follow the predefined route trajectory) exceeds a vehicle torque demand threshold value may serve as an indication that the vehicle is struggling to follow the predefined route trajectory at that location. In particular, if combined with side slip, both torque demand and (lateral) side slip exceeding their thresholds may indicate that e.g. the ground conditions at the location are poor.

In some examples, such a (further) vehicle property may be vehicle speed (e.g. a speed $v_L$ of the vehicle, e.g. of a center of the vehicle, in the longitudinal direction $L$). To detect that the vehicle speed exceeds a vehicle speed threshold may serve as an indication that e.g. lateral deviations may be due to excessive vehicle speed, that the ground is sloping so much that brakes of the vehicle are not capable to limit vehicle speed, at the location, and similar.

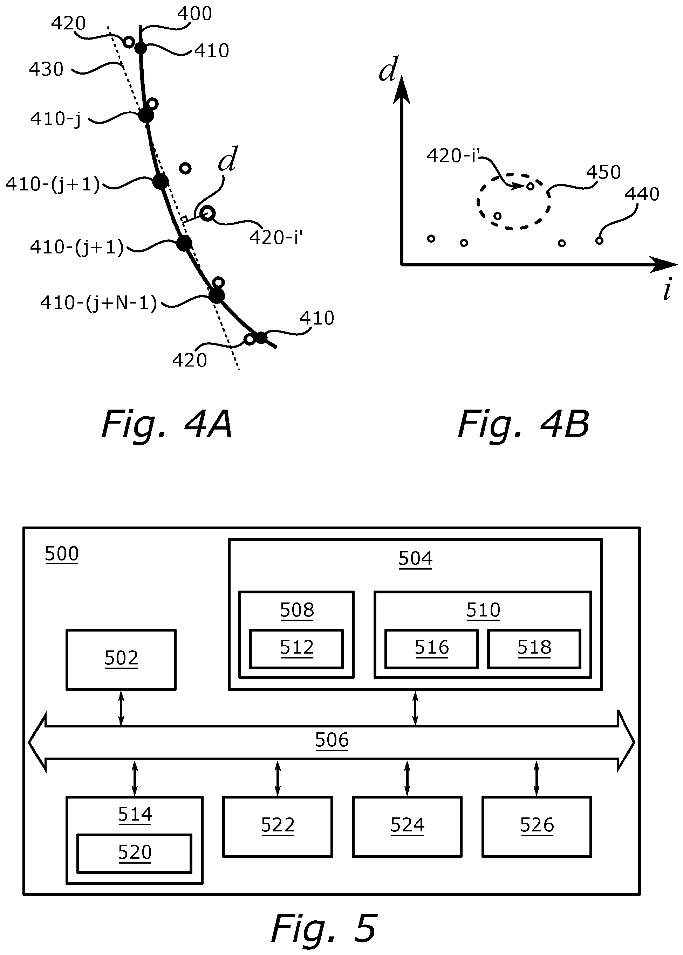

**FIG. 4A** schematically illustrates how the processing circuitry 110 may be configured to detect that a vehicle is deviating from a predefined route trajectory 400 at a particular geographical position 420-i (as indicated by the data 130), by considering lateral deviations from the predefined route trajectory 400. As an example, lateral deviations may be considered by sampling the predefined route trajectory 400 at a plurality of (coordinate) points 410. Then, for each geographical position data point 420, N sample points from the route 400 are selected, wherein the N sample points are selected such that they are both behind and ahead of the geographical position data point. In the example of FIG. 4A, $N = 4$ points 410-j, 410-(j+1), 401-(j+2) and 401-(j+N-1) (i.e. 401-(j+3)) points on the predefined route trajectory 400 are selected for a particular geographical position point 420-i'. A line, such as a straight line 430, is matched to the N points 410-j to 410-(j+N-1), e.g. by linear interpolation. If $N = 2$, the line 430 is just a straight line between two points. As a next operation (performed by the processing circuitry 110), a lateral deviation is defined as an (orthogonal) distance d from the geographical position 420-i', i.e. as a shortest distance between the position 420-i' and the line 430 (such as a projection of the position point 420-i' on the line 430). A location may then be detected by e.g. confirming that the distance d exceeds a threshold value, or e.g. by detecting outliers as will be described below.

FIG. 4B schematically illustrates an example of how the processing circuitry 110 may be configured to detect the troublesome location by detecting outliers. FIG. 4B includes a plot of distance $d$ as a function of geographical position index $i$, and it can be seen that for some of the indices, the corresponding distance points 450 appears to be outliers, compared to one or more other distance points 440. In particular, the distance point corresponding to geographic position point 420-i' as used in FIG. 4A appears to be one such outlier. This point 420-i', as well as e.g. one or more neighboring points, may thus be considered to define the/a troublesome location as envisaged herein. To find such outliers, the processing circuitry 110 may for example check whether each distance is above an outlier distance threshold value, or use more sophisticated methods. For example, the processing circuitry 110 may be configured to use Hampel filtering for such a purpose, wherein for each distance point, a sliding window (consisting of the point and e.g. N neighboring points both before and after the distance point) is used to compute a median value as well as a standard deviation. A point may be considered to be an outlier if it is e.g. at least a certain number of such standard deviations from the median, or similar. Other methods for outlier detection such as known already in the art of course also envisaged.

Generally herein, a "location" that is considered troublesome may be a single geographical position/-point, a collection of such points, or e.g. a geographical area drawn such that it includes one or more such points.

As envisaged herein, after having detected at least one troublesome location (e.g. a point or area), the processing circuitry 110 is configured to provide the indication 150 of the location and/or to automatically update the route trajectory such that the amount of struggling to follow the route at the detected at least one location is either reduced or eliminated. For example, such automated updating may include to reduce a curvature of the route trajectory at the detected at least one location, or similar. Other envisaged examples include to e.g. adjust (i.e. reduce or increase) a desired speed (such as specified in the route data 141) at the location, a desired acceleration, and/or similar.

As envisaged herein, the detected location can be overlayed on e.g. a map showing the predefined route trajectory, such that e.g. the operator is made aware of where along the route there are troublesome locations, and such that the operator may take action to update the route trajectory to avoid the issues related therewith, such as vehicles failing to follow the route and/or struggling too much to follow the route. Such overlays may include e.g. where there are lateral deviations, and/or where one or more of the above-indicated further vehicle properties exceed their respective threshold values, and similar. Of course, such overlays may not necessarily indicate only where the threshold values are exceeded, but may instead e.g. show the values of the one or more further vehicle properties, a difference between the values and their respective thresholds, or similar (using e.g. colors proportional to values or such differences, etc.), such that the operator can visually see where the most critical locations are, and take suitable actions. In addition, or instead of, considering such values directly, it may in some examples be indicated how much the values deviate from corresponding desired values provided as part of the predefined route trajectory 140 (e.g. as part of the route data 141). For example, if using vehicle speed as one example, the predefined route trajectory 140 may define a desired speed at each point along the route, and by visualizing how much the actual speed (as indicated in the data 130) deviates from the desired value, an operator (or automated updating functionality) may know what locations that are more troublesome than others.

As envisaged herein, that a vehicle is struggling to follow the predefined route trajectory thus means that one or more of the (further) vehicle parameter values exceeds their corresponding threshold values, and/or that the difference between such values and their corresponding desired values as provided as part of the predefined route trajectory, and similar, exceeds corresponding difference threshold values. In addition, lateral deviations may be used to indicate that the vehicle is not only struggling but also failing to follow the predefined route trajectory, and a "troublesome" location as envisaged herein is thus defined as a location where the vehicle either struggles or fails to follow the predefined route trajectory. That the vehicles are more "likely" to deviate from, and/or to struggle to follow), the predefined route trajectory implies a statistical sense, e.g. that based on historical data recorded during attempted route-following for vehicles, it can be seen that there are vehicles that have deviated and/or struggled, and that it is thus likely that also vehicles that attempts to follow the same (unmodified) route will also struggle and/or deviate. Failing to follow the route may of course also be considered as "struggling".

In general, it is envisaged herein to e.g. overlay one or more layers of data indicative of troublesome locations, including any combination of e.g. lateral deviations and one or more further vehicle property values, or e.g. only one or more further vehicle property values. This in order to provide an indication about what parts of the predefined route trajectory that is currently too hard to follow for the vehicles, such that the route trajectory may be updated to reduce such discrepancies. It is to be noted that the present disclosure envisages not to improve/-change the way in which the vehicles behave in order for the vehicles to more likely follow the already defined route, but rather to improve/change how the route that the vehicles are supposed to follow is defined, to improve agreement between the desired/ordered route and the route(s) as actually driven. Technical benefits of such a solution include e.g. that a feeling that the overall system is not behaving as expected is avoided, that the vehicles are less likely to be damaged as part of e.g. route-following struggle and/or e.g. hitting stationary objects, driving into ditches, and similar, and in that e.g. maintenance efforts and costs are reduced as less struggle likely results also in less component wear. For example, by indicating where on a map the vehicles have more slip, excessive tire wear caused by such slip can be avoided by updating the corresponding routes such that these locations are avoided. In addition to all of the above, the envisaged solution also reduces additional wear on the ground itself, as continuing to drive across troublesome areas are otherwise likely to make the situation even worse. The envisaged solution thus provides an alternative to contemporary solutions, in which there are no solutions for how to, in an automated and structured way, identify and handle such troublesome locations along predefined routes. Further, in addition to or instead of just overlaying such information on a map, the information itself can be used to automatically detect the locations and also automatically update the route trajectory as described herein.

In some examples, the processing circuitry 110 may be configured to, once one or more locations considered troublesome have been identified/detected, automatically update the route trajectory e.g. by use of path planning. As envisaged herein, in some examples, such path planning may correspond to (e.g. be cast as) an optimal control problem on the form

$$\min_{x(\cdot),u(\cdot)} \int_0^T \mathcal{L}\big(x(t),u(t)\big)dt\,,$$

subject to

$$\dot{x}(t) = f\big(x(t),u(t)\big), t \in [0,T],$$

$$h\big(x(t),u(t)\big) \le 0, t \in [0,T],$$

$$x(0) = x_0, x(T) = x_T,$$

where $f$ is a function describing the vehicle, $h$ describes various path constraints, $x(\cdot)$ is a state trajectory (i.e. route trajectory), $u(\cdot)$ is a control-input trajectory, and where $x_0$ and $X_T$ are initial and end conditions on the path. $T$, a total time required to complete the route, may also be considered as a variable to optimize, i.e. such that the optimal trajectory is one that (while satisfying other required conditions) takes the shortest amount of time to complete. Such constrained optimal control problems may be solved using various approaches, including e.g. using the Hamilton-Jacobi-Bellman equation, using indirect methods (such as Pontryagin), and/or using direct methods (such as transforming into a non-linear programming, NLP, problem, e.g. by direct single shooting, direct multiple shooting, direct collocation, and similar). When modifying/optimizing only a part of the route trajectory, such as at the one or more detected locations, the initial and end conditions connect the part of the trajectory to be modified to the unmodified segments of the trajectory, to ensure that the overall resulting trajectory is still continuous. The path constraints may for example be used to limit speed, curvature, and similar, along the trajectory in accordance with what has already been described herein.

FIG. 5 is a schematic diagram of a computer system 500 for implementing examples disclosed herein. The computer system 500 is adapted to execute instructions from a computer-readable medium to perform these and/or any of the functions or processing described herein. The computer system 500 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 500 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 500 may comprise at least one computing device or electronic device capable of including firmware, hardware, and/or executing software instructions to implement the functionality described herein. The computer system 500 may include processing circuitry 502 (e.g., processing circuitry including one or more processor devices or control units), a memory 504, and a system bus 506. The computer system 500 may include at least one computing device having the processing circuitry 502. The system bus 506 provides an interface for system components including, but not limited to, the memory 504 and the processing circuitry 502. The processing circuitry 502 may include any number of hardware components for conducting data or signal processing or for executing computer code stored in memory 504. The processing circuitry 502 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 502 may further include computer executable code that controls operation of the programmable device.

The system bus 506 may be any of several types of bus structures that may further interconnect to a memory bus (with or without a memory controller), a peripheral bus, and/or a local bus using any of a variety of bus architectures. The memory 504 may be one or more devices for storing data and/or computer code for completing or facilitating methods described herein. The memory 504 may include database components, object code components, script components, or other types of information structure for supporting the various activities herein. Any distributed or local memory device may be utilized with the systems and methods of this description. The memory 504 may be communicably connected to the processing circuitry 502 (e.g., via a circuit or any other wired, wireless, or network connection) and may include computer code for executing one or more processes described herein. The memory 504 may include non-volatile memory 508 (e.g., read-only memory (ROM), erasable programmable read-only memory (EPROM), electrically erasable programmable read-only memory (EEPROM), etc.), and volatile memory 510 (e.g., random-access memory (RAM)), or any other medium which can be used to carry or store desired program code in the form of machine-executable instructions or data structures and which can be accessed by a computer or other machine with processing circuitry 502. A basic input/output system (BIOS) 512 may be stored in the non-volatile memory 508 and can include the basic routines that help to transfer information between elements within the computer system 500.

The computer system 500 may further include or be coupled to a non-transitory computer-readable storage medium such as the storage device 514, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 514 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 514 and/or in the volatile memory 510, which may include an operating system 516 and/or one or more program modules 518. All or a portion of the examples disclosed herein may be implemented as a computer program 520 stored on a transitory or non-transitory computer-usable or computer-readable storage medium (e.g., single medium or multiple media), such as the storage device 514, which includes complex programming instructions (e.g., complex computer-readable program code) to cause the processing circuitry 502 to carry out actions described herein. Thus, the computer-readable program code of the computer program 520 can comprise software instructions for implementing the functionality of the examples described herein when executed by the processing circuitry 502. In some examples, the storage device 514 may be a computer program product (e.g., readable storage medium) storing the computer program 520 thereon, where at least a portion of a computer program 520 may be loadable (e.g., into a processor) for implementing the functionality of the examples described herein when executed by the processing circuitry 502. The processing circuitry 502 may serve as a controller or control system for the computer system 500 that is to implement the functionality described herein.

The computer system 500 may include an input device interface 522 configured to receive input and selections to be communicated to the computer system 500 when executing instructions, such as from a keyboard, mouse, touch-sensitive surface, etc. Such input devices may be connected to the processing circuitry 502 through the input device interface 522 coupled to the system bus 506 but can be connected through other interfaces, such as a parallel port, an Institute of Electrical and Electronic Engineers (IEEE) 1394 serial port, a Universal Serial Bus (USB) port, an IR interface, and the like. The computer system 500 may include an output device interface 524 configured to forward output, such as to a display, a video display unit (e.g., a liquid crystal display (LCD) or a cathode ray tube (CRT)). The computer system 500 may include a communications interface 526 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

The following is a non-exhaustive list of examples as envisaged herein:

Example 1: A computer system for automated identification of locations of struggle during attempted route-following for vehicles , including processing circuitry configured to: obtain data indicative of at least geographical position for one or more vehicles when attempting to follow a predefined route trajectory; detect, based on said data, a location along the route trajectory at which the one or more vehicles appear to be more likely to deviate from, and/or to struggle to follow, the predefined route trajectory, and in response to said detection, i) issue a notification indicative of the detected location to an operator responsible for route trajectory planning , and/or ii) automatically update the predefined route trajectory based on said data to improve trajectory following and/or to reduce said struggle to follow.

Example 2: The computer system of example 1, wherein to detect the location includes to: compute lateral deviations between geographical position and the predefined route trajectory, and detect the location as an outlier among the lateral deviations.

Example 3: The computer system of example 2, wherein to detect the location as an outlier among the lateral deviations includes to use Hampel filtering.

Example 4: The computer system of any one of examples 1 to 3, wherein to automatically update the predefined trajectory includes to smooth the predefined trajectory at the detected location .

Example 5: The computer system of any one of the preceding examples, wherein to detect the location includes to detect that at the detected location, a distance between said geographical position and a stationary object along the predefined route is below a distance threshold value.

Example 6: The computer system of any one of the preceding examples, wherein the data is indicative of at least one further vehicle property value at said geographical position, and wherein to detect the location includes to determine that at the detected location, the one further vehicle property value indicated by the data exceeds a threshold value and/or exceeds an assumed vehicle property value with more than a difference threshold value.

Example 7: The computer system of example 6, wherein such a further vehicle property is vehicle slip.

Example 8: The computer system of example 7, wherein vehicle slip includes lateral side slip.

Example 9: The computer system of example 7 or 8, wherein vehicle slip includes longitudinal slip.

Example 10: The computer system of any one of examples 7 to 9, wherein vehicle slip is for at least one wheel of the vehicle or for the vehicle as a whole.

Example 11: The computer system of any one of examples 6 to 10, wherein such a further vehicle property is vehicle angular speed.

Example 12: The computer system of any one of examples 6 to 11, wherein such a further vehicle property is vehicle vibration.

Example 13: The computer system of any one of examples 6 to 12, wherein such a further vehicle property is vehicle torque demand.

Example 14: The computer system of any one of examples 6 to 13, wherein such a further vehicle property is vehicle speed.

Example 15: The computer system of any one of the preceding examples, wherein to automatically update the predefined route trajectory includes to adjust a desired speed at the detected location and/or to reduce a curvature of the predefined route trajectory at the detected location.

Example 16: The computer system of any one of the preceding examples, wherein the vehicles are autonomous vehicles.

Example 17: The computer system of any one of the preceding examples, wherein the vehicles form part of a fleet of vehicles.

Example 18: A computer-implemented method for automated identification of locations of struggle during attempted route-following for autonomous vehicles, the method being performed by processing circuitry of a computer system , the method including:

- obtaining , by the processing circuitry, data indicative of at least geographical position for one or more autonomous vehicles when attempting to follow a predefined route trajectory;
- detecting , by the processing circuitry and based on said data, a location along the route trajectory at which the one or more vehicles appear to be more likely to deviate from, and/or to struggle to follow, the predefined route trajectory, and
- in response to said detection and by the processing circuitry, i) issuing a notification indicative of the detected location to an operator responsible for route trajectory planning, and/or ii) automatically updating the predefined route trajectory based on the data to improve trajectory following and/or to reduce said struggle to follow.

Example 19: A computer program product including program code for performing, when executed by the processing circuitry, the method of example 18.

Example 20: A non-transitory computer-readable storage medium including instructions which, when executed by the processing circuitry, cause the processing circuitry to perform the method of example 18.

**Claims**

1. A computer system (100) for automated identification of locations of struggle during attempted route-following for autonomous vehicles (120), comprising processing circuitry (110) configured to:

- obtain data (130) indicative of at least geographical position for one or more autonomous vehicles when attempting to follow a predefined route trajectory (140, 300, 400);
- detect, based on said data, a location (320, 420-i) along the route trajectory at which the one or more vehicles appear to be more likely to deviate from, and/or to struggle to follow, the predefined route trajectory, and
- in response to said detection, i) issue a notification (150) indicative of the detected location to an operator (152) responsible for route trajectory planning, and/or ii) automatically update the predefined route trajectory (140, 330) based on said data to improve trajectory following and/or to reduce said struggle to follow.

2. The computer system of claim 1, wherein to detect the location comprises to:

- compute lateral deviations (d) between geographical position (420) and the predefined route trajectory (400), and
- detect the location as an outlier (440) among the lateral deviations.

3. The computer system of claim 2, wherein to detect the location as an outlier among the lateral deviations comprises to use Hampel filtering.

4. The computer system of any one of claims 1 to 3, wherein to automatically update the predefined trajectory comprises to smooth the predefined trajectory at the detected location.

5. The computer system of any one of the preceding claims, wherein to detect the location comprises to detect that at the detected location, a distance between said geographical position and a stationary object along the predefined route is below a distance threshold value.

6. The computer system of any one of the preceding claims, wherein the data is indicative of at least one further vehicle property value at said geographical position, and wherein to detect the location comprises to determine that at the detected location, the one further vehicle property value indicated by the data exceeds a threshold value and/or exceeds an assumed vehicle property value with more than a difference threshold value.

7. The computer system of claim 6, wherein such a further vehicle property is vehicle side slip.

8. The computer system of claim 6 or 7, wherein such a further vehicle property is vehicle angular speed.

**9.** The computer system of any one of claims 6 to 8, wherein such a further vehicle property is vehicle vibration.

**10.** The computer system of any one of claims 6 to 9, wherein such a further vehicle property is vehicle torque demand.

**11.** The computer system of any one of claims 6 to 10, wherein such a further vehicle property is vehicle speed.

**12.** The computer system of any one of the preceding claims, wherein to automatically update the predefined route trajectory comprises to adjust a desired speed at the detected location and/or to reduce a curvature of the predefined route trajectory at the detected location.

**13.** A computer-implemented method (200) for automated identification of locations of struggle during attempted route-following for autonomous vehicles, the method being performed by processing circuitry (110) of a computer system (100), the method comprising:

- obtaining (S210), by the processing circuitry, data indicative of at least geographical position for one or more autonomous vehicles when attempting to follow a predefined route trajectory;
- detecting (S220), by the processing circuitry and based on said data, a location along the route trajectory at which the one or more vehicles appear to be more likely to deviate from, and/or to struggle to follow, the predefined route trajectory, and
- in response to said detection and by the processing circuitry, i) issuing (S232) a notification indicative of the detected location to an operator responsible for route trajectory planning, and/or ii) automatically updating (S234) the predefined route trajectory based on the data to improve trajectory following and/or to reduce said struggle to follow.

**14.** A computer program product comprising program code for performing, when executed by the processing circuitry, the method of claim 13.

**15.** A non-transitory computer-readable storage medium comprising instructions which, when executed by the processing circuitry, cause the processing circuitry to perform the method of claim 13.

*Fig. 1*

*Fig. 2*

*Fig. 3*

*Fig. 4A*

*Fig. 4B*

*Fig. 5*

Europäisches
Patentamt
European
Patent Office
Office européen
des brevets

**EUROPEAN SEARCH REPORT**

Application Number

EP 24 21 7060

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/346928 A1 (HUNG WAN-TING [US] ET AL) 17 October 2024 (2024-10-17) * paragraphs [0006], [0023] - [0030] * * paragraphs [0040], [0045], [0050], [0051], [0057] - [0067] * * figures 1-5 * | 1-15 | INV. G01C21/34 G01C21/36 G08G1/01 G08G1/00 B60W30/10 B60W40/02 |
| X | EP 3 098 797 A1 (TOYOTA MOTOR CO LTD [JP]) 30 November 2016 (2016-11-30) * paragraphs [0002], [0003], [0014] - [0017] * * paragraphs [0050], [0021], [0028], [0031] - [0033], [0044] - [0044], [0049] * * figures 1-8 * | 1-15 | B60W40/10 B60W60/00 G05D1/646 ADD. G01C21/00 |
| A | US 2021/086795 A1 (ZHAO YUE [US] ET AL) 25 March 2021 (2021-03-25) * the whole document * | 1-15 | |

TECHNICAL FIELDS
SEARCHED (IPC)

G01C
G08G
B60W
G06Q
G05D

The present search report has been drawn up for all claims

| Place of search | Date of completion of the search | Examiner |
|---|---|---|
| The Hague | 22 May 2025 | Yosri, Samir |

EPO FORM 1503 03.82 (P04C01)

## ANNEX TO THE EUROPEAN SEARCH REPORT
## ON EUROPEAN PATENT APPLICATION NO.

EP 24 21 7060

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2025

| Patent document cited in search report | | Publication date | Patent family member(s) | | Publication date |
|---|---|---|---|---|---|
| US 2024346928 | A1 | 17-10-2024 | EP | 4446703 A1 | 16-10-2024 |
| | | | US | 2024346928 A1 | 17-10-2024 |
| EP 3098797 | A1 | 30-11-2016 | CN | 105934786 A | 07-09-2016 |
| | | | EP | 3098797 A1 | 30-11-2016 |
| | | | JP | 5929936 B2 | 08-06-2016 |
| | | | JP | 2015138316 A | 30-07-2015 |
| | | | US | 2016379484 A1 | 29-12-2016 |
| | | | WO | 2015111344 A1 | 30-07-2015 |
| US 2021086795 | A1 | 25-03-2021 | CN | 112204350 A | 08-01-2021 |
| | | | CN | 112204633 A | 08-01-2021 |
| | | | EP | 3803274 A1 | 14-04-2021 |
| | | | EP | 3803828 A1 | 14-04-2021 |
| | | | JP | 6911214 B1 | 28-07-2021 |
| | | | JP | 7140849 B2 | 21-09-2022 |
| | | | JP | 2021519941 A | 12-08-2021 |
| | | | JP | 2021520003 A | 12-08-2021 |
| | | | RU | 2756872 C1 | 06-10-2021 |
| | | | RU | 2762786 C1 | 22-12-2021 |
| | | | US | 2019369616 A1 | 05-12-2019 |
| | | | US | 2021086795 A1 | 25-03-2021 |
| | | | WO | 2019231456 A1 | 05-12-2019 |
| | | | WO | 2019231521 A1 | 05-12-2019 |

EPO FORM P0459

For more details about this annex : see Official Journal of the European Patent Office, No. 12/82